# EUROPEAN PATENT SPECIFICATION

(11) **EP 4 549 273 B1**
(45) Date of publication and mention of the grant of the patent: **25.03.2026**
(21) Application number: 23738147.0
(22) Date of filing: 13.06.2023
(51) Int. Cl.: B60W 30/14, B60W 30/16, B60W 30/18, B60W 50/08

(54) **CONTROL DEVICE AND CONTROL METHOD FOR MOTORCYCLIST ASSISTANCE SYSTEM**
STEUERUNGSVORRICHTUNG UND STEUERUNGSVERFAHREN FÜR MOTORRADFAHRERASSISTENZSYSTEM
DISPOSITIF DE RÉGULATION ET PROCÉDÉ DE RÉGULATION POUR UN SYSTÈME D'ASSISTANCE AU MOTOCYCLISTE

(30) Priority: 30.06.2022 JP 2022106124
(43) Date of publication of application: 07.05.2025
(73) Proprietor: Robert Bosch GmbH, 70442 Stuttgart (DE)
(72) Inventor: PFAU, Lars, Yokohama-shi, Kanagawa 224-8501 (JP)
(86) International application number: PCT/IB2023/056078
(87) International publication number: WO 2024/003647

(56) References cited:
- US-A1- 2021 188 258
- US-A1- 2022 135 033
- US-A1- 2022 135 165
- US-B2- 11 077 862

## Description

### Technical Field

The present invention relates to a controller for a rider-assistance system of a motorcycle and a control method for a rider-assistance system of a motorcycle.

### Background Art

In some conventional rider-assistance systems, a controller executes speed control operation of an own vehicle on the basis of surrounding environment information of the own vehicle that is acquired during travel of the own vehicle (for example, see PTL 1). US 2022 135 033 A1 discloses a method for automatically setting a speed-control or proximity-control system of a two-wheeled motor vehicle. US 11077862 B2 discloses a vehicle control system that includes a control unit configured to support a driving of a vehicle by selectively operating in one driving support mode among a plurality of driving support modes.

### Citation List

### Patent Literature

PTL 1: WO2018/197965A1
PTL 2: US 2022 135 033 A1
PTL 3: US 11077862 B2

### Summary of Invention

### Technical Problem

It is assumed that the speed control operation of the own vehicle is executed in the rider-assistance system in an enabled state of a group travel mode as a mode in which plural motorcycles including the own vehicle travel in a group. In addition, in the case where the own vehicle has to stop or become a crawl during execution of such speed control operation, it is desirable that the own vehicle can stop or become the crawl automatically. Unlike other vehicles (for example, a passenger car, a truck, and the like), the motorcycle has a small body size, and a degree of freedom in a travel position thereof is high. Accordingly, in the case where the control operation is executed during the group travel in a similar manner to that executed while the group travel is not made, it may be difficult for the own vehicle to stop or become the crawl with appropriate behavior.

The invention has been made with the above-described problem as the background and therefore obtains a controller capable of improving assistance performance for a rider. The invention also obtains a control method capable of improving the assistance performance for the rider.

### Solution to Problem

A controller according to the invention is a controller for a rider-assistance system, includes: an acquisition section that acquires surrounding environment information of an own vehicle during travel of the own vehicle; and a speed control execution section that executes speed control operation of the own vehicle on the basis of the surrounding environment information acquired by the acquisition section, and further includes a determination section that determines presence or absence of necessity to stop the own vehicle or make the own vehicle become a crawl during the travel of the own vehicle. The speed control execution section executes first speed control operation as the speed control operation to adjust a positional relationship between the own vehicle and another vehicle traveling around the own vehicle in a state where a group travel mode is disabled, the group travel mode being a mode in which plural motorcycles including the own vehicle travel in a group, executes first automatic control operation as control operation to automatically stop the own vehicle or to automatically make the own vehicle become the crawl in the case where the determination section determines the presence of the necessity during execution of the first speed control operation, executes second speed control operation as the speed control operation to adjust the positional relationship between the own vehicle and the motorcycle, which is other than the own vehicle, of the plural motorcycles traveling in the group in an enabled state of the group travel mode, executes second automatic control operation as the control operation to automatically stop the own vehicle or to automatically make the own vehicle become the crawl in the case where the determination section determines the presence of the necessity during execution of the second speed control operation, and changes behavior of the own vehicle between the first automatic control operation and the second automatic control operation.

A control method according to the invention is a control method for a rider-assistance system, includes: an acquisition step in which an acquisition section of a controller acquires surrounding environment information of an own vehicle during travel of the own vehicle; and a speed control execution step in which a speed control execution section of the controller executes speed control operation of the own vehicle on the basis of the surrounding environment information acquired in the acquisition step, and further includes: a determination step in which a determination section of the controller determines presence or absence of necessity to stop the own vehicle or make the own vehicle become a crawl during the travel of the own vehicle. In the speed control execution step, the speed control execution section executes first speed control operation as the speed control operation to adjust a positional relationship between the own vehicle and another vehicle traveling around the own vehicle in a state where a group travel mode is disabled, the group travel mode being a mode in which plural motorcycles including the own vehicle travel in a group, executes first automatic control operation as control operation to automatically stop the own vehicle or to automatically make the own vehicle become the crawl in the case where the presence of the necessity is determined in the determination step during execution of the first speed control operation, executes second speed control operation as the speed control operation to adjust the positional relationship between the own vehicle and the motorcycle, which is other than the own vehicle, of the plural motorcycles traveling in the group in an enabled state of the group travel mode, executes second automatic control operation as control operation to automatically stop the own vehicle or to automatically make the own vehicle become the crawl in the case where the presence of the necessity is determined in the determination step during execution of the second speed control operation, and changes behavior of the own vehicle between the first automatic control operation and the second automatic control operation.

### Advantageous Effects of Invention

In the controller and the control method according to the invention, the speed control execution section executes the first speed control operation to adjust the positional relationship between the own vehicle and the other vehicle traveling around the own vehicle in the disabled state of the group travel mode, executes the first automatic control operation as the control operation to automatically stop the own vehicle or to automatically make the own vehicle become the crawl in the case where the presence of the necessity to stop the own vehicle or make the own vehicle become the crawl is determined during the execution of the first speed control operation, executes the second speed control operation to adjust the positional relationship between the own vehicle and the other motorcycle traveling in the group in the enabled state of the group travel mode, executes the second automatic control operation as the control operation to automatically stop the own vehicle or to automatically make the own vehicle become the crawl in the case where the presence of the necessity to stop the own vehicle or make the own vehicle become the crawl is determined during the execution of the second speed control operation, and changes the behavior of the own vehicle between the first automatic control operation and the second automatic control operation. Accordingly, in the state where the group travel is made, the own vehicle can stop or become the crawl with the different behavior from that in the state where the group travel is not made. As a result, assistance performance for a rider is improved.

### Brief Description of Drawings

Fig. 1 is a view illustrating a mounted state of a rider-assistance system according to an embodiment of the invention to a motorcycle.
Fig. 2 is a diagram illustrating a system configuration of the rider-assistance system according to the embodiment of the invention.
Fig. 3 is a view for explaining a configuration of the rider-assistance system according to the embodiment of the invention.
Fig. 4 is a view for explaining the configuration of the rider-assistance system according to the embodiment of the invention.
Fig. 5 is a view for explaining the configuration of the rider-assistance system according to the embodiment of the invention.
Fig. 6 is a chart illustrating an operation flow of a controller for the rider-assistance system according to the embodiment of the invention.

### Description of Embodiments

A description will hereinafter be made on a controller and a control method according to the invention with reference to the drawings.

For example, a description will hereinafter be made on a case where the controller and the control method according to the invention are used for a rider-assistance system of a two-wheeled motor vehicle. However, the controller and the control method according to the invention may be used for a rider-assistance system of a motorcycle other than the two-wheeled motor vehicle. The motorcycles include a vehicle having an engine as a power source, a vehicle having an electric motor as the power source, and the like. Examples of the motorcycles are a three-wheeled motor vehicle, a motorbike, a scooter, and an electric scooter.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

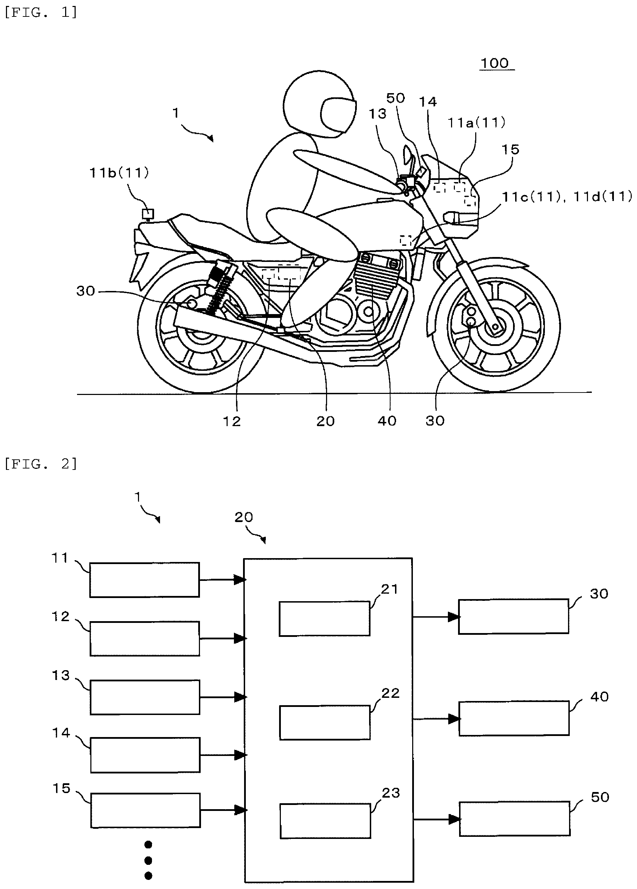

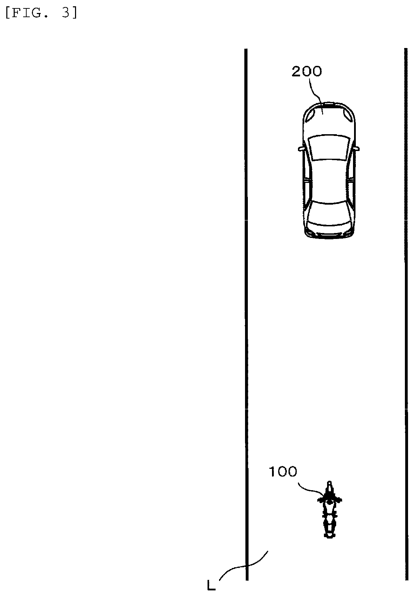

Fig. 1 is a view illustrating a mounted state of the rider-assistance system according to the embodiment of the invention to a motorcycle. Fig. 2 is a diagram illustrating a system configuration of the rider-assistance system according to the embodiment of the invention. Fig. 3 to Fig. 5 are views for explaining a configuration of the rider-assistance system according to the embodiment of the invention.

As illustrated in Fig. 1 and Fig. 2, a rider-assistance system 1 is mounted to a motorcycle 100. For example, the rider-assistance system 1 includes a surrounding environment sensor 11, a vehicle behavior sensor 12, a setting input device 13, a communication device 14, a positioning sensor 15, a controller (ECU) 20, a brake system 30, a drive system 40, and a notification device 50 when necessary. The motorcycle 100 corresponds to the "own vehicle" in the invention.

In the rider-assistance system 1, the controller 20 executes rider-assistance operation to assist a rider of the motorcycle 100 in driving by using output of the surrounding environment sensor 11, the vehicle behavior sensor 12, the setting input device 13, the communication device 14, and/or the positioning sensor 15. The controller 20 executes the rider-assistance operation by outputting control commands to various devices (for example, the brake system 30, the drive system 40, the notification device 50, and the like). When necessary, the controller 20 receives output of various sensors (not illustrated) for detecting other types of information (for example, information on an operation state of the brake system 30 by the rider, information on an operation state of the drive system 40 by the rider, and the like). Each component of the rider-assistance system 1 may exclusively be used for the rider-assistance system 1 or may be shared with another system.

The surrounding environment sensor 11 at least includes a detection section 11a that detects surrounding environment in front of the motorcycle 100. The surrounding environment sensor 11 may include a detection section 11b that detects the surrounding environment behind the motorcycle 100, may include a detection section 11c that detects the surrounding environment to the left of the motorcycle 100, or may include a detection section 11d that detects the surrounding environment to the right of the motorcycle 100. Each of the detection sections 11a, 11b, 11c, 11d is a radar, a Lidar sensor, an ultrasonic sensor, a camera, or the like, for example. At least a part of each of the detection section 11c and the detection section 11d may be substituted by the detection section 11a or the detection section 11b.

Examples of the vehicle behavior sensor 12 are a vehicle speed sensor and an inertial measurement unit (IMU). The vehicle speed sensor detects a speed that is generated to the motorcycle 100. The vehicle speed sensor may detect another physical quantity that can substantially be converted to the speed generated to the motorcycle 100. The IMU detects acceleration in three axes (a front-rear direction, a vehicle width direction, and a vehicle height direction) and angular velocities in three axes (roll, pitch, and yaw) generated to the motorcycle 100. The IMU may detect other physical quantities that can substantially be converted to the three-axis acceleration and the three-axis angular velocities generated to the motorcycle 100. Alternatively, the IMU may partially detect the three-axis acceleration and the three-axis angular velocities.

The setting input device 13 accepts input of various settings by the rider. For example, the rider can switch to enable or disable any of various types of the rider-assistance operation by using the setting input device 13. In addition, for example, the rider can set various modes or various control parameters (for example, allowable values or the like) that are used in the various types of the rider-assistance operation by using the setting input device 13. The setting input device 13 may accept an operation by the rider's body (for example, a hand, a foot, or the like) or may accept voice produced by the rider. In addition, the setting input device 13 may be provided to the motorcycle 100 or may be provided to an accessory (for example, a helmet, a glove, or the like) that is associated with the motorcycle 100.

The communication device 14 communicates wirelessly with another communication device provided to a surrounding vehicle around the motorcycle 100 and/or another communication device provided to a road facility (for example, a traffic light, a traffic sign, a guardrail, a utility pole, or the like). For example, the other communication device provided to the surrounding vehicle transmits, to the communication device 14, travel state information of the surrounding vehicle detected by the surrounding vehicle, surrounding environment information of the surrounding vehicle detected by the surrounding vehicle, or the like. For example, the other communication device provided to the road facility transmits, to the communication device 14, state information of the road facility, surrounding environment information of the road facility detected by the road facility, or the like.

The positioning sensor 15 receives positioning signals that are transmitted from plural communications satellites to identify a position of the motorcycle 100 on a global positioning system. The position of the motorcycle 100 is matched against map information to acquire positional information on a map.

The controller 20 at least includes an acquisition section 21, a speed control execution section 22, and a determination section 23. The controller 20 as a whole or each of the sections of the controller 20 may collectively be provided in a single casing or may separately be provided in plural casings. In addition, the controller 20 as a whole or each of the sections of the controller 20 may be a microcomputer, a microprocessor unit, or the like, may be one whose firmware or the like can be updated, or may be a program module or the like that is executed by a command from a CPU or the like, for example.

During travel of the motorcycle 100, the acquisition section 21 acquires surrounding environment information of the motorcycle 100 on the basis of the output of the surrounding environment sensor 11. The surrounding environment information includes positional relationship information between the motorcycle 100 and a target (for example, a vehicle, an obstacle, the road facility, a person, an animal, or the like) that is positioned around the motorcycle 100. Examples of the positional relationship information are information on a relative position, a relative distance, a relative speed, relative acceleration, relative jerk, a passing time difference, and a predicted time until a collision. The positional relationship information may be information on another physical quantity that can substantially be converted to one of those. During the travel of the motorcycle 100, the acquisition section 21 may acquire the surrounding environment information of the motorcycle 100 on the basis of the output of the communication device 14.

The speed control execution section 22 executes, as the rider-assistance operation, speed control operation of the motorcycle 100 on the basis of the surrounding environment information (in particular, the positional relationship information) that is acquired by the acquisition section 21. When executing the speed control operation, the speed control execution section 22 outputs the control command to the brake system 30 or the drive system 40. The brake system 30 brakes the motorcycle 100. The drive system 40 as a power source of the motorcycle 100 drives the motorcycle 100. The brake system 30 may be controlled to generate or increase deceleration, or may be controlled to generate or increase the acceleration. The drive system 40 may be controlled to generate or increase the acceleration, or may be controlled to generate or increase the deceleration.

When executing the rider-assistance operation, the speed control execution section 22 outputs the control command to the notification device 50 as necessary. The notification device 50 may warn or notify the rider of the information by display (that is, a sensation through a visual organ as a sensory organ), may warn or notify the rider of the information by sound (that is, a sensation through an auditory organ as the sensory organ), or may warn or notify the rider of the information by vibration (that is, a sensation through a tactile organ as the sensory organ). Examples of the notification device 50 are a display, a lamp, a speaker, and a vibrator. The notification device 50 may be provided to the motorcycle 100 or may be provided to the accessory (for example, the helmet, the glove, or the like) that is associated with the motorcycle 100. In addition, notification operation may warn or notify the rider of the information by generating the instantaneous deceleration or acceleration to the motorcycle 100. That is, the brake system 30 or the drive system 40 may constitute the notification device 50.

As illustrated in Fig. 3, in the case where a group travel mode, which will be described below, is disabled, the speed control execution section 22 causes the motorcycle 100 to execute first speed control operation. The first speed control operation is the speed control operation to adjust a positional relationship between the motorcycle 100 and a target vehicle, that is, another vehicle 200 traveling in front of the motorcycle 100 on the basis of positional relationship information therebetween. In the positional relationship adjustment, the positional relationship information between the motorcycle 100 and the other vehicle 200 traveling at a position other than the front of the motorcycle 100 may be taken into consideration. The first speed control operation may be the speed control operation to adjust the positional relationship between the motorcycle 100 and the other vehicle 200 traveling at the position other than the front of the motorcycle 100 only on the basis of the positional relationship information therebetween.

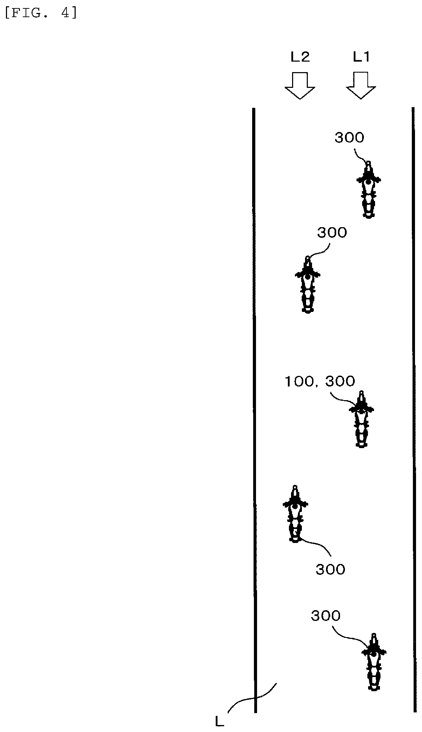

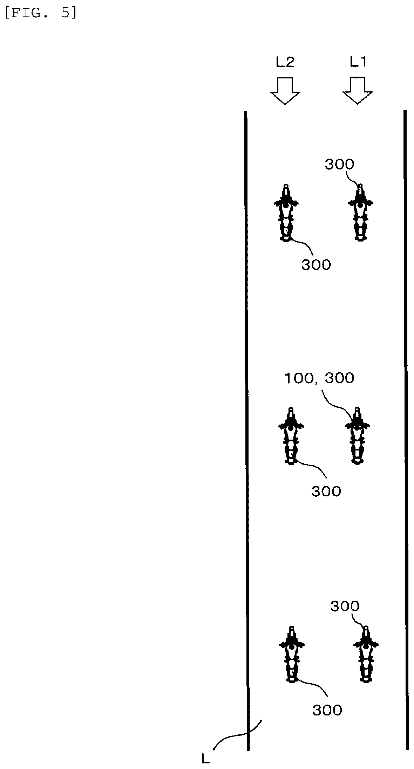

The determination section 23 determines whether the group travel mode is enabled during the travel of the motorcycle 100. As illustrated in Fig. 4 and Fig. 5, the group travel mode is a mode in which plural motorcycles 300 including the motorcycle 100 travel in a group, that is, travel in formation as a group.

For example, the group travel mode is automatically switched between being enabled or being disabled by the speed control execution section 22 on the basis of the surrounding environment information that is acquired by the acquisition section 21. The determination section 23 determines whether the group travel mode is enabled on the basis of the switching information. The speed control execution section 22 determines whether the travel of the plural motorcycles 300 including the motorcycle 100 in a particular aspect (for example, an aspect as illustrated in Fig. 4 in which two vehicle lines L1, L2 are formed such that the plural motorcycles 300 including the motorcycle 100 travel in a zig-zag manner, or an aspect as illustrated in Fig. 5 in which the two vehicle lines L1, L2 are formed such that two each of the plural motorcycles 300 including the motorcycle 100 travel side by side) continues over a reference time or a reference travel distance on the basis of the surrounding environment information that is acquired by the acquisition section 21. Then, if the determination is positive, the speed control execution section 22 automatically enables the group travel mode. The speed control execution section 22 may identify the other motorcycle 300 that is positioned in a travel lane L in which the motorcycle 100 travels, and may set only the identified other motorcycle 300 as a determination target. Alternatively, the speed control execution section 22 may identify the other motorcycle 300 that keeps positioned around the motorcycle 100 over the reference time or the reference travel distance without using information on a boundary of the travel lane L, and may set the identified other motorcycle 300 as the determination target.

For example, the group travel mode is switched between being enabled or being disabled by the setting input by the rider, and the determination section 23 determines whether the group travel mode is enabled on the basis of the output of the setting input device 13 that is acquired by the acquisition section 21. Here, the speed control execution section 22 may automatically suggest to enable and/or disable the group travel mode on the basis of the surrounding environment information that is acquired by the acquisition section 21, and the suggestion may be confirmed by the rider's setting input of acceptance.

The speed control execution section 22 causes the motorcycle 100 to execute second speed control operation in the case where the group travel mode is enabled. The second speed control operation is the speed control operation to adjust the positional relationship between the motorcycle 100 and the target vehicle, that is, the other motorcycle 300 traveling in the group with the motorcycle 100 and traveling ahead of the motorcycle 100 on the basis of the positional relationship information therebetween. In the positional relationship adjustment, the positional relationship information between the motorcycle 100 and the other vehicle 300, which travels in the group with the motorcycle 100 and travels at a position other than the front of the motorcycle 100, may be taken into consideration. The second speed control operation may be the speed control operation to adjust the positional relationship between the motorcycle 100 and the other motorcycle 300, which travels in the group with the motorcycle 100 and travels at the position other than the front of the motorcycle 100, only on the basis of the positional relationship information therebetween. Whether the other motorcycle 300 is the vehicle traveling in the group with the motorcycle 100 may be determined on the basis of information on an elapsed time of the positional relationship with the motorcycle 100 or may be determined on the basis of information that is registered in advance by the rider. Examples of the information that is registered in advance by the rider are: information on arrangement (for example, the top, the middle, the last, an order from the top or the last, a right vehicle line, a left vehicle line, or the like) of the motorcycle 100 in the formation that is formed by the group travel; and information used to identify the other motorcycle 300 that belongs to the group (for example, a vehicle type, a color, license plate information, or the like).

The positional relationship adjustment may be adjustment of the positional relationship between the motorcycle 100 and the target vehicle (that is, the other vehicle 200 or the other motorcycle 300) by causing the motorcycle 100 to automatically generate the deceleration or the acceleration without relying on the rider's operation of the brake system 30 and the drive system 40 (for example, adaptive cruise control operation to set the target vehicle as a speed following target, operation to actuate the brake system 30 in a state where the rider operates the drive system 40 in order to respectively control an inter-vehicular distance with or a passing time difference from the target vehicle to a distance or a time difference corresponding to an operation amount of the drive system 40, operation to actuate the drive system 40 in a state where the rider operates the brake system 30 in order to respectively control the inter-vehicular distance with or the passing time difference from the target vehicle to the distance or the time difference corresponding to an operation amount of the brake system 30, or the like), may be adjustment of the positional relationship between the motorcycle 100 and the target vehicle by automatically increasing or reducing a braking force generated to the motorcycle 100 in order to correct excess or deficiency of the rider's operation of the brake system 30, or may be adjustment of the positional relationship between the motorcycle 100 and the target vehicle by automatically increasing or reducing drive power generated to the motorcycle 100 in order to correct excess or deficiency of the rider's operation of the drive system 40.

The determination section 23 determines presence or absence of necessity to stop the motorcycle 100 or make the motorcycle 100 become a crawl during the travel of the motorcycle 100. In the case where the determination section 23 determines the presence of the necessity to stop the motorcycle 100 or make the motorcycle 100 become the crawl during the execution of the first speed control operation, the speed control execution section 22 executes first automatic control operation that is control operation to automatically stop the motorcycle 100 or to automatically make the motorcycle 100 become the crawl. In the case where the determination section 23 determines the absence of the necessity to stop the motorcycle 100 or make the motorcycle 100 become the crawl during the execution of the first speed control operation, the speed control execution section 22 does not execute the first automatic control operation but continues the first speed control operation. In the case where the determination section 23 determines the presence of the necessity to stop the motorcycle 100 or make the motorcycle 100 become the crawl during the execution of the second speed control operation, the speed control execution section 22 executes second automatic control operation that is control operation to automatically stop the motorcycle 100 or to automatically make the motorcycle 100 become the crawl. In the case where the determination section 23 determines the absence of the necessity to stop the motorcycle 100 or make the motorcycle 100 become the crawl during the execution of the second speed control operation, the speed control execution section 22 does not execute the second automatic control operation but continues the second speed control operation. The speed control execution section 22 makes behavior of the motorcycle 100 differ between the first automatic control operation and the second automatic control operation.

For example, the determination section 23 determines the presence or the absence of the necessity to stop the motorcycle 100 or make the motorcycle 100 become the crawl on the basis of the output of the vehicle behavior sensor 12 of the motorcycle 100. In the case where the output of the vehicle behavior sensor 12 is information indicating that the speed of the motorcycle 100 falls below a reference value at the time point or in the future, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the output of the surrounding environment sensor 11. The determination section 23 determines the presence of the necessity to stop the motorcycle 100 or make the motorcycle 100 become the crawl in the case where the output of the surrounding environment sensor 11 is information indicating that there is a vehicle (for example, the other motorcycle 300 that travels with the motorcycle 100 in the group, the other vehicle 200 that does not travel with the motorcycle 100 in the group, or the like) that is stopped or slows down in front of the motorcycle 100. In the case where the output of the surrounding environment sensor 11 is information indicating that the vehicle traveling in front of the motorcycle 100 is decelerated at high deceleration, the determination section 23 determines the presence of the necessity to stop the motorcycle 100 or make the motorcycle 100 become the crawl. In the case where the output of the surrounding environment sensor 11 is information indicating that a display color of the traffic light ahead of the motorcycle 100 is red or yellow, the determination section 23 determines the presence of the necessity to stop the motorcycle 100 or make the motorcycle 100 become the crawl. In the case where the output of the surrounding environment sensor 11 is information indicating that there is a stop line ahead of the motorcycle 100, the determination section 23 determines the presence of the necessity to stop the motorcycle 100 or make the motorcycle 100 become the crawl. In the case where the output of the surrounding environment sensor 11 is information indicating that there is a stop or crawl sign ahead of the motorcycle 100, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the output of the communication device 14. The determination section 23 determines the presence of the necessity to stop the motorcycle 100 or make the motorcycle 100 become the crawl in the case where the output of the communication device 14 is information indicating that there is the vehicle (for example, the other motorcycle 300 that travels with the motorcycle 100 in the group, the other vehicle 200 that does not travel with the motorcycle 100 in the group, or the like) that is stopped or slows down in front of the motorcycle 100. In the case where the output of the communication device 14 is the information indicating that the vehicle traveling in front of the motorcycle 100 is decelerated at the high deceleration, the determination section 23 determines the presence of the necessity to stop the motorcycle 100 or make the motorcycle 100 become the crawl. In the case where the output of the communication device 14 is the information indicating that the display color of the traffic light ahead of the motorcycle 100 is red or yellow, the determination section 23 determines the presence of the necessity to stop the motorcycle 100 or make the motorcycle 100 become the crawl. In the case where the output of the communication device 14 is the information indicating that there is the stop line ahead of the motorcycle 100, the determination section 23 determines the presence of the necessity to stop the motorcycle 100 or make the motorcycle 100 become the crawl. In the case where the output of the communication device 14 is the information indicating that there is the stop or crawl sign ahead of the motorcycle 100, the determination section 23 determines the presence of the necessity to stop the motorcycle 100 or make the motorcycle 100 become the crawl. In the case where the output of the communication device 14 is information indicating that a traffic jam or a traffic accident occurs ahead of the motorcycle 100, the determination section 23 determines the presence of the necessity to stop the motorcycle 100 or make the motorcycle 100 become the crawl. In the case where the output of the communication device 14 is information indicating that roadwork is performed ahead of the motorcycle 100, the determination section 23 determines the presence of the necessity to stop the motorcycle 100 or make the motorcycle 100 become the crawl.

For example, the determination section 23 determines the presence or the absence of the necessity to stop the motorcycle 100 or make the motorcycle 100 become the crawl on the basis of the map information. In the case where the positional information of the motorcycle 100 on the map, which is acquired on the basis of the output of the positioning sensor 15 and the map information, is the information indicating that there is the stop line ahead of the motorcycle 100, the determination section 23 determines the presence of the necessity to stop the motorcycle 100 or make the motorcycle 100 become the crawl. In the case where the positional information of the motorcycle 100 on the map, which is acquired on the basis of the output of the positioning sensor 15 and the map information, is information indicating that the motorcycle 100 travels in an area where the stop or slowing down is required, the determination section 23 determines the presence of the necessity to stop the motorcycle 100 or make the motorcycle 100 become the crawl.

For example, the speed control execution section 22 adjusts the positional relationship between the motorcycle 100 and the other vehicle 200 as the target vehicle, which travels ahead of the motorcycle 100, in the first automatic control operation, and adjusts the positional relationship between the motorcycle 100 and the other motorcycle 300 as the target vehicle, which travels ahead of the motorcycle 100, in the second automatic control operation. In an aspect illustrated in Fig. 4 or Fig. 5, the target vehicle in the second automatic control operation may be the other motorcycle 300 that belongs to the vehicle line L1, to which the motorcycle 100 belongs, and travels ahead of the motorcycle 100, or may be the other motorcycle 300 that belongs to the different vehicle line L2 from the vehicle line L1, to which the motorcycle 100 belongs, and travels ahead of the motorcycle 100. The speed control execution section 22 makes the positional relationship between the motorcycle 100 and the target vehicle in an advancing direction, which is adjusted in the second automatic control operation, have an approaching tendency when compared to the positional relationship between the motorcycle 100 and the target vehicle in the advancing direction, which is adjusted in the first automatic control operation. More specifically, the speed control execution section 22 controls the speed of the motorcycle 100 in the first automatic control operation such that the inter-vehicular distance or the passing time difference from the target vehicle (that is, the other vehicle 200 traveling ahead of the motorcycle 100) is increased (that is, shows a separating tendency), and controls the speed of the motorcycle 100 in the second automatic control operation such that the inter-vehicular distance or the passing time difference from the target vehicle (that is, the other motorcycle 300 traveling ahead of the motorcycle 100) is reduced (that is, shows the approaching tendency). In addition, the speed control execution section 22 makes the other motorcycle 300, which is the target vehicle for the positional relationship adjustment, differ between the second speed control operation, which is executed when the determination section 23 determines the absence of the necessity to stop the motorcycle 100 or make the motorcycle 100 become the crawl, and the second automatic control operation. More specifically, in the aspect illustrated in Fig. 4, in the second speed control operation, which is executed when the determination section 23 determines the absence of the necessity to stop the motorcycle 100 or make the motorcycle 100 become the crawl, the speed control execution section 22 controls the speed of the motorcycle 100 with the other motorcycle 300, which belongs to the different vehicle line L2 from the vehicle line L1, to which the motorcycle 100 belongs, and travels ahead of the motorcycle 100, being the target vehicle for the positional relationship adjustment. In the second automatic control operation, the speed control execution section 22 controls the speed of the motorcycle 100 with the other motorcycle 300, which belongs to the vehicle line L1, to which the motorcycle 100 belongs, and travels ahead of the motorcycle 100, being the target vehicle for the positional relationship adjustment. Furthermore, in the aspect illustrated in Fig. 5, in the second speed control operation, which is executed when the determination section 23 determines the absence of the necessity to stop the motorcycle 100 or make the motorcycle 100 become the crawl, the speed control execution section 22 controls the speed of the motorcycle 100 with the other motorcycle 300, which travels on a side of the motorcycle 100, being the target vehicle for the positional relationship adjustment. In the second automatic control operation, the speed control execution section 22 controls the speed of the motorcycle 100 with the other motorcycle 300, which travels ahead of the motorcycle 100, being the target vehicle for the positional relationship adjustment.

For example, the speed control execution section 22 adjusts the positional relationship between the motorcycle 100 and the other vehicle 200 as the target vehicle, which travels ahead of the motorcycle 100, in the first automatic control operation, and adjusts the positional relationship between the motorcycle 100 and the other motorcycle 300 as the target vehicle, which travels on the side of the motorcycle 100, in the second automatic control operation. In the aspect illustrated in Fig. 4, in the second speed control operation, which is executed when the determination section 23 determines the absence of the necessity to stop the motorcycle 100 or make the motorcycle 100 become the crawl, the speed control execution section 22 prohibits the motorcycle 100 from overtaking the target vehicle or traveling side by side with the target vehicle. In the second automatic control operation, the speed control execution section 22 allows the motorcycle 100 to overtake the target vehicle or travel side by side with the target vehicle. In the aspect illustrated in Fig. 5, the speed control execution section 22 makes the positional relationship between the motorcycle 100 and the target vehicle in the advancing direction, which is adjusted in the second automatic control operation, have the approaching tendency when compared to the positional relationship between the motorcycle 100 and the target vehicle in the advancing direction, which is adjusted in the second speed control operation executed when the determination section 23 determines the absence of the necessity to stop the motorcycle 100 or make the motorcycle 100 become the crawl. More specifically, in the second speed control operation, which is executed when the determination section 23 determines the absence of the necessity to stop the motorcycle 100 or make the motorcycle 100 become the crawl, the speed control execution section 22 controls the speed of the motorcycle 100 to be in a state where an allowable value of the inter-vehicular distance or the passing time difference from the target vehicle (that is, the other motorcycle 300 that travels on the side of the motorcycle 100) in the advancing direction is large (that is, in the separating tendency state). In the second automatic control operation, the speed control execution section 22 controls the speed of the motorcycle 100 to be in a state where the allowable value of the inter-vehicular distance or the passing time difference from the target vehicle (that is, the other motorcycle 300 that travels on the side of the motorcycle 100) in the advancing direction is small (that is, in the approaching tendency state). Here, in the second speed control operation and/or the second automatic control operation, which is executed when the determination section 23 determines the absence of the necessity to stop the motorcycle 100 or make the motorcycle 100 become the crawl, the speed control execution section 22 may set the other motorcycle 300, which travels ahead of the motorcycle 100, as the target vehicle in addition to the other motorcycle 300, which travels on the side of the motorcycle 100.

For example, in the second speed control operation, which is executed when the determination section 23 determines the absence of the necessity to stop the motorcycle 100 or make the motorcycle 100 become the crawl, the speed control execution section 22 adjusts the positional relationship between the motorcycle 100 and the target vehicle on the basis of surrounding environment information of a first range in the surroundings of the motorcycle 100. In the second automatic control operation, the speed control execution section 22 adjusts the positional relationship between the motorcycle 100 and the target vehicle on the basis of surrounding environment information of a second range, which differs from the first range, in the surroundings of the motorcycle 100. More specifically, in the second speed control operation, which is executed when the determination section 23 determines the absence of the necessity to stop the motorcycle 100 or make the motorcycle 100 become the crawl, the speed control execution section 22 adjusts the positional relationship on the basis of the output of the detection section, a detection range of which is the first range, in the surrounding environment sensor 11. In the second automatic control operation, the speed control execution section 22 adjusts the positional relationship on the basis of the output of another detection section, a detection range of which is the second range, in the surrounding environment sensor 11. In the second speed control operation, which is executed when the determination section 23 determines the absence of the necessity to stop the motorcycle 100 or make the motorcycle 100 become the crawl, and the second automatic control operation, the surrounding environment information may be acquired by the common detection section, and only the area, which is used for the adjustment of the positional relationship, in the acquired surrounding environment information may be switched therebetween. In the second speed control operation, which is executed when the determination section 23 determines the absence of the necessity to stop the motorcycle 100 or make the motorcycle 100 become the crawl, and the second automatic control operation, a support mechanism of the common detection section may be driven to change the detection range. The first range and the second range may partially overlap each other or may not overlap each other at all.

For example, the speed control execution section 22 changes an allowable value of a speed change state amount, which is generated to the motorcycle 100, between the second automatic control operation and each or one of the first automatic control operation and the second speed control operation. The second speed control operation is executed when the determination section 23 determines the absence of the necessity to stop the motorcycle 100 or make the motorcycle 100 become the crawl. More specifically, in the second automatic control operation, the speed control execution section 22 controls the speed of the motorcycle 100 in a state of increasing or reducing an allowable value of the deceleration and/or an allowable value of a differential value of the deceleration in comparison with that in the first automatic control operation and/or the second speed control operation, which is executed when the determination section 23 determines the absence of the necessity to stop the motorcycle 100 or make the motorcycle 100 become the crawl.

### <Operation of Rider-Assistance System>

A description will be made on operation of the rider-assistance system according to the embodiment.

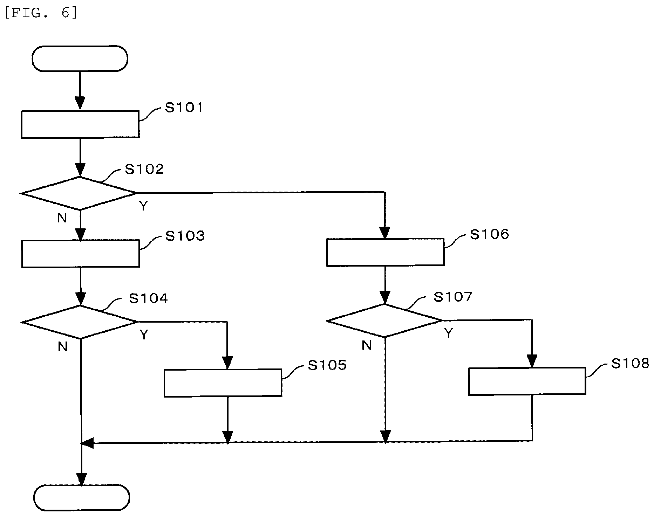

Fig. 6 is a chart illustrating an operation flow of the controller in the rider-assistance system according to the embodiment of the invention.

The controller 20 executes the operation flow illustrated in Fig. 6 during the travel of the motorcycle 100.

### (Acquisition Step)

In step S101, the acquisition section 21 acquires the surrounding environment information of the motorcycle 100 during the travel of the motorcycle 100. The acquisition section 21 also acquires the various types of the information when necessary.

### (Determination Step)

In step S102, the determination section 23 determines whether the group travel mode is enabled during the travel of the motorcycle 100. If the group travel mode is disabled, the processing proceeds to step S103. If the group travel mode is enabled, the processing proceeds to step S106.

### (Speed Control Execution Step)

In step S103, the speed control execution section 22 causes the motorcycle 100 to execute the first speed control operation.

### (Determination Step)

In step S104, the determination section 23 determines the presence or the absence of the necessity to stop the motorcycle 100 or make the motorcycle 100 become the crawl during the travel of the motorcycle 100. If the necessity to stop the motorcycle 100 or make the motorcycle 100 become the crawl is absent, the first speed control operation is continued. If the necessity to stop the motorcycle 100 or make the motorcycle 100 become the crawl is present, the processing proceeds to step S105.

### (Speed Control Execution Step)

In step S105, the speed control execution section 22 causes the motorcycle 100 to execute the first automatic control operation.

### (Speed Control Execution Step)

In step S106, the speed control execution section 22 causes the motorcycle 100 to execute the second speed control operation.

### (Determination Step)

In step S107, the determination section 23 determines the presence or the absence of the necessity to stop the motorcycle 100 or make the motorcycle 100 become the crawl during the travel of the motorcycle 100. If the necessity to stop the motorcycle 100 or make the motorcycle 100 become the crawl is absent, the second speed control operation is continued. If the necessity to stop the motorcycle 100 or make the motorcycle 100 become the crawl is present, the processing proceeds to step S108.

### (Speed Control Execution Step)

In step S108, the speed control execution section 22 causes the motorcycle 100 to execute the second automatic control operation.

### <Effects of Rider-Assistance System>

A description will be made on effects of the rider-assistance system according to the embodiment.

In the rider-assistance system 1, the speed control execution section 22 executes the first speed control operation to adjust the positional relationship between the motorcycle 100 and the other vehicle 200, which travels around the motorcycle 100, in the disabled state of the group travel mode. When the presence of the necessity to stop the motorcycle 100 or make the motorcycle 100 become the crawl is determined during the execution of the first speed control operation, the speed control execution section 22 executes the first automatic control operation as the control operation to automatically stop the motorcycle 100 or to automatically make the motorcycle 100 become the crawl. In the enabled state of the group travel mode, the speed control execution section 22 executes the second speed control operation to adjust the positional relationship between the motorcycle 100 and the other motorcycle 300, which travels in the group. When the presence of the necessity to stop the motorcycle 100 or make the motorcycle 100 become the crawl is determined during the execution of the second speed control operation, the speed control execution section 22 executes the second automatic control operation as the control operation to automatically stop the motorcycle 100 or to automatically make the motorcycle 100 become the crawl. In this way, the behavior of the motorcycle 100 is changed between the first automatic control operation and the second automatic control operation. Accordingly, in the state where the group travel is made, the motorcycle 100 can stop or become the crawl with the different behavior from that in the state where the group travel is not made. As a result, assistance performance for the rider is improved.

For example, the description has been made so far on the case where, when the determination section 23 determines the presence of the necessity to stop the motorcycle 100 or make the motorcycle 100 become the crawl, the first speed control operation is switched to the first automatic control operation unconditionally, or the second speed control operation is switched to the second automatic control operation unconditionally. However, the switching may automatically be suggested, and such suggestion may be confirmed by the rider's setting input of acceptance. In addition, in the case where the rider instructs switching to the first automatic control operation by a setting operation on the setting input device 13 during the execution of the first speed control operation, the determination section 23 may determine the presence of the necessity to stop the motorcycle 100 or make the motorcycle 100 become the crawl. Furthermore, in the case where the rider instructs switching to the second automatic control operation by the setting operation on the setting input device 13 during the execution of the second speed control operation, the determination section 23 may determine the presence of the necessity to stop the motorcycle 100 or make the motorcycle 100 become the crawl. Moreover, the rider may be notified of each type of the switching via the notification device 50. The rider may be able to manually input various settings (for example, a setting of the control parameter to control the behavior of the motorcycle 100 in the second automatic control operation, a setting of which of the aspect illustrated in Fig. 4 and the aspect illustrated in Fig. 5 is adopted for the travel of the motorcycle 100 in the second speed control operation, a setting of which of the aspect illustrated in Fig. 4 and the aspect illustrated in Fig. 5 is adopted to stop the motorcycle 100 or make the motorcycle 100 become the crawl in the second automatic control operation, and the like) of each of the control operation.

### Reference Signs List

1: Rider-assistance system
11: Surrounding environment sensor
12: Vehicle behavior sensor
13: Setting input device
14: Communication device
15: Positioning sensor
20: Controller
21: Acquisition section
22: Speed control execution section
23: Determination section
30: Brake system
40: Drive system
50: Notification device
100, 300: Motorcycle
200: Other vehicle
L: Travel lane
L1, L2: Vehicle line

## Claims

1. A controller (20) for a rider-assistance system (1), the controller (20) comprising:
an acquisition section (21) that acquires surrounding environment information of an own vehicle (100) during travel of the own vehicle (100); and
a speed control execution section (22) that executes speed control operation of the own vehicle (100) on the basis of the surrounding environment information acquired by the acquisition section (21), and further comprising:
a determination section (23) that determines presence or absence of necessity to stop the own vehicle (100) or make the own vehicle (100) become a crawl during the travel of the own vehicle (100), wherein
the speed control execution section (22)
executes first speed control operation as the speed control operation to adjust a positional relationship between the own vehicle (100) and another vehicle (200) traveling around the own vehicle (100) in a disabled state of a group travel mode as a mode in which plural motorcycles (300) including the own vehicle (100) travel in a group,
executes first automatic control operation as control operation to cause the own vehicle (100) to automatically stop or to automatically become the crawl in the case where the determination section (23) determines the presence of the necessity during execution of the first speed control operation,
executes second speed control operation as the speed control operation to adjust the positional relationship between the own vehicle (100) and the motorcycle (300), which is other than the own vehicle (100), of the plural motorcycles (300) traveling in the group in an enabled state of the group travel mode,
executes second automatic control operation as the control operation to cause the own vehicle (100) to automatically stop or to automatically become the crawl in the case where the determination section (23) determines the presence of the necessity during execution of the second speed control operation, and
changes behavior of the own vehicle (100) between the first automatic control operation and the second automatic control operation.

2. The controller (20) according to claim 1, wherein
in the second automatic control operation, the speed control execution section (22) adjusts the positional relationship between the own vehicle (100) and the other motorcycle (300) that travels ahead of the own vehicle (100).

3. The controller (20) according to claim 2, wherein
the speed control execution section (22)
adjusts a positional relationship between the own vehicle (100) and the another vehicle (200) traveling ahead of the own vehicle (100) in the first automatic control operation, and
makes the positional relationship between the own vehicle (100) and the other motorcycle (300) in an advancing direction, which is adjusted in the second automatic control operation, have an approaching tendency when compared to the positional relationship between the own vehicle (100) and the another vehicle (200) in the advancing direction, which is adjusted in the first automatic control operation.

4. The controller (20) according to claim 2, wherein
the speed control execution section (22) changes the other motorcycle (300) as a target vehicle for adjustment of the positional relationship between the second speed control operation, which is executed when the determination section (23) determines the absence of the necessity, and the second automatic control operation.

5. The controller (20) according to claim 1, wherein
in the second automatic control operation, the speed control execution section (22) adjusts the positional relationship between the own vehicle (100) and the other motorcycle (300) that travels on a side of the own vehicle (100).

6. The controller (20) according to claim 5, wherein
the speed control execution section (22) prohibits the own vehicle (100) from overtaking the other motorcycle (300) or traveling side by side with the other motorcycle (300) in the second speed control operation, which is executed when the determination section (23) determines the absence of the necessity, and allows the own vehicle (100) to overtake the other motorcycle (300) or travel side by side with the other motorcycle (300) in the second automatic control operation.

7. The controller (20) according to claim 5, wherein
the speed control execution section (22) makes the positional relationship between the own vehicle (100) and the other motorcycle (300) in the advancing direction, which is adjusted in the second automatic control operation, have an approaching tendency when compared to the positional relationship between the own vehicle (100) and the other motorcycle (300) in the advancing direction, which is adjusted in the second speed control operation executed when the determination section (23) determines the absence of the necessity.

8. The controller (20) according to claim 5, wherein
the speed control execution section (22) changes the other motorcycle (300) as a target vehicle for adjustment of the positional relationship between the second speed control operation, which is executed when the determination section (23) determines the absence of the necessity, and the second automatic control operation.

9. The controller (20) according to claim 1, wherein
the speed control execution section (22) adjusts the positional relationship on the basis of the surrounding environment information of a first range in surroundings of the own vehicle (100) in the second speed control operation, which is executed when the determination section (23) determines the absence of the necessity, and adjusts the positional relationship between the own vehicle (100) and the other motorcycle (300) on the basis of the surrounding environment information of a second range, which differs from the first range, in the surroundings of the own vehicle (100) in the second automatic control operation.

10. The controller (20) according to claim 1, wherein
the speed control execution section (22) changes an allowable value of a speed change state amount, which is generated to the own vehicle (100), between the second automatic control operation and each or one of the first automatic control operation and the second speed control operation, which is executed when the determination section (23) determines the absence of the necessity.

11. The controller (20) according to any one of claims 1 to 10, wherein
the determination section (23) determines the presence or the absence of the necessity on the basis of output of a vehicle behavior sensor (12) that is mounted to the own vehicle (100).

12. The controller (20) according to any one of claims 1 to 10, wherein
the determination section (23) determines the presence or the absence of the necessity on the basis of output of a surrounding environment sensor (11) that is mounted to the own vehicle (100).

13. The controller (20) according to any one of claims 1 to 10, wherein
the determination section (23) determines the presence or the absence of the necessity on the basis of output of a communication device (14) that communicates with a surrounding vehicle and/or a road facility wirelessly.

14. The controller (20) according to any one of claims 1 to 10, wherein
the determination section (23) determines the presence or the absence of the necessity on the basis of map information.

15. A control method for a rider-assistance system (1) comprising:
an acquisition step (S101) in which an acquisition section (21) of a controller (20) acquires surrounding environment information of an own vehicle (100) during travel of the own vehicle (100); and
a speed control execution step (S103, S105, S106, S108) in which a speed control execution section (22) of the controller (20) executes speed control operation of the own vehicle (100) on the basis of the surrounding environment information acquired in the acquisition step (S101), and further comprising:
a determination step (S104, S107) in which a determination section (23) of the controller (20) determines presence or absence of necessity to stop the own vehicle (100) or make the own vehicle (100) become a crawl during the travel of the own vehicle (100), wherein
in the speed control execution step (S103, S105, S106, S108), the speed control execution section (22)
executes first speed control operation as the speed control operation to adjust a positional relationship between the own vehicle (100) and another vehicle (200) traveling around the own vehicle (100) in a disabled state of a group travel mode as a mode in which plural motorcycles (300) including the own vehicle (100) travel in a group,
executes first automatic control operation as control operation to cause the own vehicle (100) to automatically stop or to automatically become the crawl in the case where the presence of the necessity is determined in the determination step (S104) during execution of the first speed control operation,
executes second speed control operation as the speed control operation to adjust the positional relationship between the own vehicle (100) and the motorcycle (300), which is other than the own vehicle (100), of the plural motorcycles (300) traveling in the group in an enabled state of the group travel mode,
executes second automatic control operation as control operation to cause the own vehicle (100) to automatically stop or to automatically become the crawl in the case where the presence of the necessity is determined in the determination step (S107) during execution of the second speed control operation, and
changes behavior of the own vehicle (100) between the first automatic control operation and the second automatic control operation.

## Patentansprüche

1. Steuerung (20) für ein Fahrerassistenzsystem (1), wobei die Steuerung (20) Folgendes umfasst:
einen Erfassungsabschnitt (21), der Umgebungsinformationen eines eigenen Fahrzeugs (100) während der Fahrt des eigenen Fahrzeugs (100) erfasst; und
einen Abschnitt zur Ausführung der
Geschwindigkeitssteuerung (22), der einen Geschwindigkeitssteuerungsvorgang des eigenen Fahrzeugs (100) auf Grundlage der Umgebungsinformationen ausführt, die durch den Erfassungsabschnitt (21) erfasst werden, und ferner umfassend:
einen Bestimmungsabschnitt (23), der Vorhandensein oder Fehlen einer Notwendigkeit bestimmt, dass das eigene Fahrzeug (100) anhält oder dass sich das eigene Fahrzeug (100) während der Fahrt des eigenen Fahrzeugs (100) im Schritttempo weiterbewegt, wobei der Abschnitt zur Ausführung der Geschwindigkeitssteuerung (22)
einen ersten Geschwindigkeitssteuerungsvorgang als den Geschwindigkeitssteuerungsvorgang ausführt, um eine Positionsbeziehung zwischen dem eigenen Fahrzeug (100) und einem anderen Fahrzeug (200), das in einem deaktivierten Zustand eines Gruppenfahrmodus um das eigene Fahrzeug (100) fährt, als einen Modus anzupassen, in dem mehrere Motorräder (300) einschließlich des eigenen Fahrzeugs (100) in einer Gruppe fahren,
einen ersten automatischen Steuerungsvorgang als Steuerungsvorgang ausführt, um das eigene Fahrzeug (100) zu veranlassen, automatisch anzuhalten oder sich automatisch im Schritttempo weiterzubewegen, falls der Bestimmungsabschnitt (23) das Vorhandensein der Notwendigkeit während der Ausführung des ersten Geschwindigkeitssteuerungsvorgangs bestimmt,
einen zweiten Geschwindigkeitssteuerungsvorgang als den Geschwindigkeitssteuerungsvorgang ausführt, um die Positionsbeziehung zwischen dem eigenen Fahrzeug (100) und dem Motorrad (300), das von dem eigenen Fahrzeug (100) verschieden ist, der mehreren Motorräder (300), die in der Gruppe in einem aktivierten Zustand des Gruppenfahrmodus fahren, anzupassen,
einen zweiten automatischen Steuerungsvorgang als Steuerungsvorgang ausführt, um das eigene Fahrzeug (100) zu veranlassen, automatisch anzuhalten oder sich automatisch im Schritttempo weiterzubewegen, falls der Bestimmungsabschnitt (23) das Vorhandensein der Notwendigkeit während der Ausführung des zweiten Geschwindigkeitssteuerungsvorgangs bestimmt, und
das Verhalten des eigenen Fahrzeugs (100) zwischen dem ersten automatischen Steuerungsvorgang und dem zweiten automatischen Steuerungsvorgang ändert.

2. Steuerung (20) nach Anspruch 1, wobei in dem zweiten automatischen Steuerungsvorgang, der Abschnitt zur Ausführung der Geschwindigkeitssteuerung (22) die Positionsbeziehung zwischen dem eigenen Fahrzeug (100) und dem anderen Motorrad (300), das vor dem eigenen Fahrzeug (100) fährt, anpasst.

3. Steuerung (20) nach Anspruch 2, wobei der Abschnitt zur Ausführung der Geschwindigkeitssteuerung (22)
eine Positionsbeziehung zwischen dem eigenen Fahrzeug (100) und dem anderen Fahrzeug (200), das vor dem eigenen Fahrzeug (100) fährt, in dem ersten automatischen Steuerungsvorgang anpasst, und
bewirkt, dass die Positionsbeziehung zwischen dem eigenen Fahrzeug (100) und dem anderen Motorrad (300) in einer Vorwärtsbewegungsrichtung, die in dem zweiten automatischen Steuerungsvorgang angepasst wird, eine Annäherungsneigung gegenüber der Positionsbeziehung zwischen dem eigenen Fahrzeug (100) und dem anderen Fahrzeug (200) in Vorwärtsbewegungsrichtung, die in dem ersten automatischen Steuerungsvorgang angepasst wird, aufweist.

4. Steuerung (20) nach Anspruch 2, wobei der Abschnitt zur Ausführung der Geschwindigkeitssteuerung (22) das andere Motorrad (300) als ein Zielfahrzeug zur Anpassung der Positionsbeziehung zwischen dem zweiten Geschwindigkeitssteuerungsvorgang, der ausgeführt wird, wenn der Bestimmungsabschnitt (23) das Fehlen der Notwendigkeit bestimmt, und dem zweiten automatischen Steuerungsvorgang ändert.

5. Steuerung (20) nach Anspruch 1, wobei in dem zweiten automatischen Steuerungsvorgang, der Abschnitt zur Ausführung der Geschwindigkeitssteuerung (22) die Positionsbeziehung zwischen dem eigenen Fahrzeug (100) und dem anderen Motorrad (300), das neben dem eigenen Fahrzeug (100) fährt, anpasst.

6. Steuerung (20) nach Anspruch 5, wobei der Abschnitt zur Ausführung der Geschwindigkeitssteuerung (22) in dem zweiten Geschwindigkeitssteuerungsvorgang, der ausgeführt wird, wenn der Bestimmungsabschnitt (23) das Fehlen der Notwendigkeit feststellt, dem eigenen Fahrzeug (100) verbietet, das andere Motorrad (300) zu überholen oder Seite an Seite mit dem anderen Motorrad (300) zu fahren, und in dem zweiten automatischen Steuerungsvorgang dem eigenen Fahrzeug (100) ermöglicht, das andere Motorrad (300) zu überholen oder Seite an Seite mit dem anderen Motorrad (300) zu fahren.

7. Steuerung (20) nach Anspruch 5, wobei der Abschnitt zur Ausführung der Geschwindigkeitssteuerung (22) bewirkt, dass die Positionsbeziehung zwischen dem eigenen Fahrzeug (100) und dem anderen Motorrad (300) in der Vorwärtsbewegungsrichtung, die in dem zweiten automatischen Steuerungsvorgang angepasst wird, eine Annäherungsneigung gegenüber der Positionsbeziehung zwischen dem eigenen Fahrzeug (100) und dem anderen Motorrad (300) in der Vorwärtsbewegungsrichtung, die in dem zweiten Geschwindigkeitssteuerungsvorgang angepasst wird, der ausgeführt wird, wenn der Bestimmungsabschnitt (23) das Fehlen der Notwendigkeit feststellt, aufweist.

8. Steuerung (20) nach Anspruch 5, wobei der Abschnitt zur Ausführung der Geschwindigkeitssteuerung (22) das andere Motorrad (300) als ein Zielfahrzeug zur Anpassung der Positionsbeziehung zwischen dem zweiten Geschwindigkeitssteuerungsvorgang, der ausgeführt wird, wenn der Bestimmungsabschnitt (23) das Fehlen der Notwendigkeit bestimmt, und dem zweiten automatischen Steuerungsvorgang ändert.

9. Steuerung (20) nach Anspruch 1, wobei der Abschnitt zur Ausführung der Geschwindigkeitssteuerung (22) in dem zweiten Geschwindigkeitssteuerungsvorgang, der ausgeführt wird, wenn der Bestimmungsabschnitt (23) das Fehlen der Notwendigkeit bestimmt, die Positionsbeziehung auf Grundlage der Umgebungsinformationen eines ersten Bereichs in der Umgebung des eigenen Fahrzeugs (100) anpasst, und im zweiten automatischen Steuerungsvorgang die Positionsbeziehung zwischen dem eigenen Fahrzeug (100) und dem anderen Motorrad (300) auf Grundlage der Umgebungsinformationen eines zweiten Bereichs, der sich von dem ersten Bereich unterscheidet, in der Umgebung des eigenen Fahrzeugs (100) anpasst.

10. Steuerung (20) nach Anspruch 1, wobei der Abschnitt zur Ausführung der Geschwindigkeitssteuerung (22) einen zulässigen Wert eines Geschwindigkeitsänderungszustandsbetrags, der für das eigene Fahrzeug (100) erzeugt wird, zwischen dem zweiten automatischen Steuerungsvorgang und dem ersten automatischen Steuerungsvorgang und/oder dem zweiten Geschwindigkeitssteuerungsvorgang, der ausgeführt wird, wenn der Bestimmungsabschnitt (23) das Fehlen der Notwendigkeit bestimmt, ändert.

11. Steuerung (20) nach einem der Ansprüche 1 bis 10, wobei
der Bestimmungsabschnitt (23) das Vorhandensein oder das Fehlen der Notwendigkeit auf Grundlage einer Ausgabe eines Fahrzeugverhaltenssensors (12), der an dem eigenen Fahrzeug (100) montiert ist, bestimmt.

12. Steuerung (20) nach einem der Ansprüche 1 bis 10, wobei
der Bestimmungsabschnitt (23) das Vorhandensein oder das Fehlen der Notwendigkeit auf Grundlage einer Ausgabe eines Umgebungssensors (11), der an dem eigenen Fahrzeug (100) montiert ist, bestimmt.

13. Steuerung (20) nach einem der Ansprüche 1 bis 10, wobei
der Bestimmungsabschnitt (23) das Vorhandensein oder das Fehlen der Notwendigkeit auf Grundlage einer Ausgabe einer Kommunikationsvorrichtung (14), die drahtlos mit einem umgebenden Fahrzeug und/oder einer Straßeneinrichtung kommuniziert, bestimmt.

14. Steuerung (20) nach einem der Ansprüche 1 bis 10, wobei
der Bestimmungsabschnitt (23) das Vorhandensein oder das Fehlen der Notwendigkeit auf Grundlage von Karteninformationen bestimmt.

15. Steuerungsverfahren für ein Fahrerassistenzsystem (1), das Folgendes umfasst:
einen Erfassungsschritt (S101), in dem ein Erfassungsabschnitt (21) einer Steuerung (20) Umgebungsinformationen eines eigenen Fahrzeugs (100) während der Fahrt des eigenen Fahrzeugs (100) erfasst; und
einen Schritt zur Ausführung der Geschwindigkeitssteuerung (S103, S105, S106, S108), in dem ein Abschnitt zur Ausführung der Geschwindigkeitssteuerung (22) der Steuerung (20) einen Geschwindigkeitssteuerungsvorgang des eigenen Fahrzeugs (100) auf Grundlage der Umgebungsinformationen ausführt, die in dem Erfassungsschritt (S101) erfasst werden, und ferner umfassend:
einen Bestimmungsschritt (S104, S107), in dem ein Bestimmungsabschnitt (23) der Steuerung (20) das Vorhandensein oder Fehlen einer Notwendigkeit bestimmt, dass das eigene Fahrzeug (100) anhält oder dass sich das eigene Fahrzeug (100) während der Fahrt des eigenen Fahrzeugs (100) im Schritttempo weiterbewegt, wobei in dem Schritt zur Ausführung der Geschwindigkeitssteuerung (S103, S105, S106, S108) der Abschnitt zur Ausführung der Geschwindigkeitssteuerung (22)
einen ersten Geschwindigkeitssteuerungsvorgang als den Geschwindigkeitssteuerungsvorgang ausführt, um eine Positionsbeziehung zwischen dem eigenen Fahrzeug (100) und einem anderen Fahrzeug (200), das in einem deaktivierten Zustand eines Gruppenfahrmodus um das eigene Fahrzeug (100) fährt, als einen Modus anzupassen, in dem mehrere Motorräder (300) einschließlich des eigenen Fahrzeugs (100) in einer Gruppe fahren,
einen ersten automatischen Steuerungsvorgang als Steuerungsvorgang ausführt, um das eigene Fahrzeug (100) zu veranlassen, automatisch anzuhalten oder sich automatisch im Schritttempo weiterzubewegen, falls im Bestimmungsschritt (S104) das Vorhandensein der Notwendigkeit während der Ausführung des ersten Geschwindigkeitssteuerungsvorgangs bestimmt wird,
einen zweiten Geschwindigkeitssteuerungsvorgang als den Geschwindigkeitssteuerungsvorgang ausführt, um die Positionsbeziehung zwischen dem eigenen Fahrzeug (100) und dem Motorrad (300), das von dem eigenen Fahrzeug (100) verschieden ist, der mehreren Motorräder (300), die in der Gruppe in einem aktivierten Zustand des Gruppenfahrmodus fahren, anzupassen,
einen zweiten automatischen Steuerungsvorgang als Steuerungsvorgang ausführt, um das eigene Fahrzeug (100) zu veranlassen, automatisch anzuhalten oder sich automatisch im Schritttempo weiterzubewegen, falls das Vorhandensein der Notwendigkeit im Bestimmungsschritt (S107) während der Ausführung des zweiten Geschwindigkeitssteuerungsvorgangs bestimmt wird, und das Verhalten des eigenen Fahrzeugs (100) zwischen dem ersten automatischen Steuerungsvorgang und dem zweiten automatischen Steuerungsvorgang ändert.

## Revendications

1. Contrôleur (20) pour un système d'assistance au pilote (1), le contrôleur (20) comprenant :
une unité d'acquisition (21) qui acquiert des informations d'environnement alentour relatives à un véhicule propre (100) pendant la circulation du véhicule propre (100) ; et
une unité d'exécution de commande de vitesse (22) qui exécute une opération de commande de vitesse du véhicule propre (100) sur la base des informations d'environnement alentour acquises par l'unité d'acquisition (21), et comprenant en outre :
une unité de détermination (23) qui détermine la présence ou l'absence d'une nécessité d'arrêter le véhicule propre (100) ou de faire en sorte que le véhicule propre (100) adopte une allure rampante pendant la circulation du véhicule propre (100), dans lequel
l'unité d'exécution de commande de vitesse (22) exécute, en tant qu'opération de commande de vitesse, une première opération de commande de vitesse destinée à ajuster une relation de position entre le véhicule propre (100) et un autre véhicule (200) circulant autour du véhicule propre (100) dans un état désactivé d'un mode de circulation en groupe, à savoir un mode dans lequel une pluralité de motocyclettes (300), comportant le véhicule propre (100), circulent en groupe,
exécute, en tant qu'opération de commande, une première opération de commande automatique destinée à faire en sorte que le véhicule propre (100) s'arrête automatiquement ou adopte automatiquement l'allure rampante dans le cas où l'unité de détermination (23) détermine la présence de la nécessité pendant l'exécution de la première opération de commande de vitesse,
exécute, en tant qu'opération de commande de vitesse, une deuxième opération de commande de vitesse destinée à ajuster la relation de position entre le véhicule propre (100) et la motocyclette (300), autre que le véhicule propre (100), de la pluralité de motocyclettes (300) circulant en groupe dans un état activé du mode de circulation en groupe,
exécute, en tant qu'opération de commande, une deuxième opération de commande automatique destinée à faire en sorte que le véhicule propre (100) s'arrête automatiquement ou adopte automatiquement l'allure rampante dans le cas où l'unité de détermination (23) détermine la présence de la nécessité pendant l'exécution de la deuxième opération de commande de vitesse, et
modifie un comportement du véhicule propre (100) entre la première opération de commande automatique et la deuxième opération de commande automatique.

2. Contrôleur (20) selon la revendication 1, dans lequel
dans la deuxième opération de commande automatique, l'unité d'exécution de commande de vitesse (22) ajuste la relation de position entre le véhicule propre (100) et l'autre motocyclette (300) qui circule devant le véhicule propre (100).

3. Contrôleur (20) selon la revendication 2, dans lequel
l'unité d'exécution de commande de vitesse (22) ajuste une relation de position entre le véhicule propre (100) et l'autre véhicule (200) circulant devant le véhicule propre (100) lors de la première opération de commande automatique, et
fait en sorte que la relation de position entre le véhicule propre (100) et l'autre motocyclette (300) dans une direction d'avancement, qui est ajustée lors de la deuxième opération de commande automatique, présente une tendance au rapprochement par rapport à la relation de position entre le véhicule propre (100) et l'autre véhicule (200) dans la direction d'avancement, qui est ajustée lors de la première opération de commande automatique.

4. Contrôleur (20) selon la revendication 2, dans lequel
l'unité d'exécution de commande de vitesse (22) modifie l'autre motocyclette (300) en tant que véhicule cible pour l'ajustement de la relation de position entre la deuxième opération de commande de vitesse, qui est exécutée lorsque l'unité de détermination (23) détermine l'absence de la nécessité, et la deuxième opération de commande automatique.

5. Contrôleur (20) selon la revendication 1, dans lequel
lors de la deuxième opération de commande automatique, l'unité d'exécution de commande de vitesse (22) ajuste la relation de position entre le véhicule propre (100) et l'autre motocyclette (300) qui circule d'un côté du véhicule propre (100).

6. Contrôleur (20) selon la revendication 5, dans lequel
l'unité d'exécution de commande de vitesse (22) interdit au véhicule propre (100) de dépasser l'autre motocyclette (300) ou de circuler côte à côte avec l'autre motocyclette (300) lors de la deuxième opération de commande de vitesse, qui est exécutée lorsque l'unité de détermination (23) détermine l'absence de la nécessité, et autorise le véhicule propre (100) à dépasser l'autre motocyclette (300) ou de circuler côte à côte avec l'autre motocyclette (300) lors de la deuxième opération de commande automatique.

7. Contrôleur (20) selon la revendication 5, dans lequel
l'unité d'exécution de commande de vitesse (22) fait en sorte que la relation de position entre le véhicule propre (100) et l'autre motocyclette (300) dans la direction d'avancement, qui est ajustée lors de la deuxième opération de commande automatique, présente une tendance au rapprochement par rapport à la relation de position entre le véhicule propre (100) et l'autre motocyclette (300) dans la direction d'avancement, qui est ajustée lors de la deuxième opération de commande de vitesse exécutée lorsque l'unité de détermination (23) détermine l'absence de la nécessité.

8. Contrôleur (20) selon la revendication 5, dans lequel
l'unité d'exécution de commande de vitesse (22) modifie l'autre motocyclette (300) en tant que véhicule cible pour l'ajustement de la relation de position entre la deuxième opération de commande de vitesse, qui est exécutée lorsque l'unité de détermination (23) détermine l'absence de la nécessité, et la deuxième opération de commande automatique.

9. Contrôleur (20) selon la revendication 1, dans lequel
l'unité d'exécution de commande de vitesse (22) ajuste la relation de position sur la base des informations d'environnement alentour correspondant à une première plage dans les alentours du véhicule propre (100) lors de la deuxième opération de commande de vitesse, qui est exécutée lorsque l'unité de détermination (23) détermine l'absence de la nécessité, et ajuste la relation de position entre le véhicule propre (100) et l'autre motocyclette (300) sur la base des informations d'environnement alentour correspondant à une deuxième plage, différente de la première plage, dans les alentours du véhicule propre (100) lors de la deuxième opération de commande automatique.

10. Contrôleur (20) selon la revendication 1, dans lequel
l'unité d'exécution de commande de vitesse (22) modifie une valeur admissible d'une quantité d'état de changement de vitesse, qui est générée pour le véhicule propre (100), entre la deuxième opération de commande automatique et chacune ou l'une de la première opération de commande automatique et de la deuxième opération de commande de vitesse, qui est exécutée lorsque l'unité de détermination (23) détermine l'absence de la nécessité.

11. Contrôleur (20) selon l'une quelconque des revendications 1 à 10, dans lequel
l'unité de détermination (23) détermine la présence ou l'absence de la nécessité sur la base d'une sortie d'un capteur de comportement de véhicule (12) monté sur le véhicule propre (100).

12. Contrôleur (20) selon l'une quelconque des revendications 1 à 10, dans lequel
l'unité de détermination (23) détermine la présence ou l'absence de la nécessité sur la base d'une sortie d'un capteur d'environnement alentour (11) monté sur le véhicule propre (100).

13. Contrôleur (20) selon l'une quelconque des revendications 1 à 10, dans lequel
l'unité de détermination (23) détermine la présence ou l'absence de la nécessité sur la base d'une sortie d'un dispositif de communication (14) qui communique sans fil avec un véhicule alentour et/ou une installation routière.

14. Contrôleur (20) selon l'une quelconque des revendications 1 à 10, dans lequel
l'unité de détermination (23) détermine la présence ou l'absence de la nécessité sur la base d'informations cartographiques.

15. Procédé de commande pour un système d'assistance au pilote (1), comprenant :
une étape d'acquisition (S101) à laquelle une unité d'acquisition (21) d'un contrôleur (20) acquiert des informations d'environnement alentour relatives à un véhicule propre (100) pendant la circulation du véhicule propre (100) ; et
une étape d'exécution de commande de vitesse (S103, S105, S106, S108) à laquelle une unité d'exécution de commande de vitesse (22) du contrôleur (20) exécute une opération de commande de vitesse du véhicule propre (100) sur la base des informations d'environnement alentour acquises à l'étape d'acquisition (S101), et
comprenant en outre :
une étape de détermination (S104, S107) à laquelle une unité de détermination (23) du contrôleur (20) détermine la présence ou l'absence d'une nécessité d'arrêter le véhicule propre (100) ou de faire en sorte que le véhicule propre (100) adopte une allure rampante pendant la circulation du véhicule propre (100), dans lequel
à l'étape d'exécution de commande de vitesse (S103, S105, S106, S108), l'unité d'exécution de commande de vitesse (22)
exécute, en tant qu'opération de commande de vitesse, une première opération de commande de vitesse destinée à ajuster une relation de position entre le véhicule propre (100) et un autre véhicule (200) circulant autour du véhicule propre (100) dans un état désactivé d'un mode de circulation en groupe, à savoir un mode dans lequel une pluralité de motocyclettes (300), comportant le véhicule propre (100), circulent en groupe,
exécute, en tant qu'opération de commande, une première opération de commande automatique destinée à faire en sorte que le véhicule propre (100) s'arrête automatiquement ou adopte automatiquement l'allure rampante dans le cas l'étape de détermination (S104) détermine la présence de la nécessité pendant l'exécution de la première opération de commande de vitesse,
exécute, en tant qu'opération de commande de vitesse, une deuxième opération de commande de vitesse destinée à ajuster la relation de position entre le véhicule propre (100) et la motocyclette (300), autre que le véhicule propre (100), de la pluralité de motocyclettes (300) circulant en groupe dans un état activé du mode de circulation en groupe,
exécute, en tant qu'opération de commande, une deuxième opération de commande automatique destinée à faire en sorte que le véhicule propre (100) s'arrête automatiquement ou adopte automatiquement l'allure rampante dans le cas à l'étape de détermination (S107) détermine la présence de la nécessité pendant l'exécution de la deuxième opération de commande de vitesse, et
modifie un comportement du véhicule propre (100) entre la première opération de commande automatique et la deuxième opération de commande automatique.
